# EUROPÄISCHE PATENTANMELDUNG

(11) **EP 2 975 740 A1**
(43) Veröffentlichungstag der Anmeldung: **20.01.2016**
(21) Anmeldenummer: 15176732.4
(22) Anmeldetag: 14.07.2015
(51) Int. Cl.: H02K 9/00, H02K 7/18, F02G 1/043

(54) **THERMODYNAMISCHE MASCHINE**

(30) Priorität: 14.07.2014 EP 14176974
(71) Anmelder: Frauscher Holding Gesellschaft m.b.H., 4774 St. Marienkirchen (AT)
(72) Erfinder: Frauscher, Josef, 4780 Schärding (AT)
(74) Vertreter: Jell, Friedrich

(57) **Zusammenfassung**

Es wird eine thermodynamische Maschine (1), insbesondere Stirlingmaschine, mit mindestens zwei Zylindern (5, 6), die je mindestens einen, mit einem Pleuel (16, 17) verbundenen Zylinderkolben (7, 8) führen, und mit einem mit den Zylindern (5, 6) verbundenen Kurbelgehäuse (2) gezeigt, das eine Kurbelwelle (12, 112), eine elektrische Maschine (18) und mindestens ein Hauptlager (20, 21) zur Lagerung der Kurbelwelle (12, 112) aufweist, wobei die Kurbelwelle (12, 112) die Maschinenwelle (19) der elektrischen Maschine (18) ausbildet sowie einen von wenigstens einem Hauptlager (20, 21) abgestützten Wellenzapfen (15) und zwei Kurbelzapfen (13, 14) aufweist, die mit jeweils einem Pleuel (16, 17) unterschiedlicher Zylinderkolben (7, 8) verbunden sind und zwischen denen die elektrische Maschine (18) angeordnet ist. Um eine besonders kompakte, energieeffiziente und standfeste thermodynamische Maschine zu schaffen, wird vorgeschlagen, dass das zu den Zylindern (5, 6) offene und gasdichte Kurbelgehäuse (2) eine Gasführung (29) mit mindestens einer Leitfläche (28, 37, 39) zur Kühlung der elektrischen Maschine (18) durch das im Kurbelgehäuse (2) aufgrund der Kolbenbewegungen der Zylinderkolben (7, 8) hin und her strömende Gas (30) aufweist.

## Beschreibung

Die Erfindung betrifft eine thermodynamische Maschine, insbesondere Stirlingmaschine, mit mindestens zwei Zylindern, die je mindestens einen, mit einem Pleuel verbundenen Zylinderkolben führen, und mit einem mit den Zylindern verbundenen Kurbelgehäuse, das eine Kurbelwelle, eine elektrische Maschine und mindestens ein Hauptlager zur Lagerung der Kurbelwelle aufweist, wobei die Kurbelwelle die Maschinenwelle der elektrischen Maschine ausbildet sowie einen von wenigstens einem Hauptlager abgestützten Wellenzapfen und zwei Kurbelzapfen aufweist, die mit jeweils einem Pleuel unterschiedlicher Zylinderkolben verbunden sind und zwischen denen die elektrische Maschine angeordnet ist.

Stirlingmaschinen mit einer elektrischen Maschine im Kurbelgehäuse sind aus dem Stand der Technik bekannt (US2010/0139262A1, EP1624176A1). So schlägt beispielsweise die US 2010/0139262 A1 vor, die elektrische Maschine zwischen zwei von Hauptlagern abgestützten Wellenzapfen einer gekröpften Kurbelwelle vorzusehen, die auch die Maschinenwelle der elektrischen Maschine ausbildet. Diese gekröpfte Kurbelwelle endet beidseitig an mit Pleuel der Zylinder der Stirlingmaschinen verbundene Kurbelzapfen, die über Kurbelwangen an die abgestützten Wellenzapfen anschließen. Ähnliches zeigt die EP1624176A1, die mit zwei gekröpften Kurbelwellen beidseitig an die Maschinenwelle der elektrischen Maschine angeflanscht ist.

Eine kröpfungsfreie Kurbelwelle, die auch als Maschinenwelle der elektrischen Maschine dient, ist aus der WO2011/00303A2 bekannt. Der Rotor der elektrischen Maschine sitzt auf einem Wellenzapfen, der beidseitig des Rotors durch je ein Hauptlager abgestützt ist. An diesen Wellenzapfen schließt an seinen beiden Wellenzapfenenden je ein Kurbelzapfen an. Jeder Kurbelzapfen ist mit einer Schwinge verbunden, an die zwei mit je einem Zylinderkolben verbundene Pleuel angreifen. Zwar kann diese eine kompakte Bauform am Kurbelgehäuse schaffen, nachteilig zeigt zu dieser Bauform die WO2011/00303A2 eine unzureichende Kühlung der elektrischen Maschine auf. Mit einem verringerten Wirkungsgrad und verringerter Standfestigkeit an der elektrischen Maschine ist zu rechnen. Dies kann die Energiebilanz der thermodynamischen Maschine negativ beeinflussen und zudem zu einer erhöhten Wartungsaufwand führen.

Die Erfindung hat sich daher die Aufgabe gestellt, ausgehend vom eingangs geschilderten Stand der Technik eine thermodynamische Maschine zu schaffen, die trotz kompakter Bauform eine hohe Energiebilanz erreichen kann. Zudem soll sich die thermodynamische Maschine mit einem geringen Wartungsaufwand auszeichnen.

Die Erfindung löst die gestellte Aufgabe dadurch, dass das zu den Zylindern offene und gasdichte Kurbelgehäuse eine Gasführung mit mindestens einer Leitfläche zur Kühlung der elektrischen Maschine durch das im Kurbelgehäuse aufgrund der Kolbenbewegungen der Zylinderkolben hin und her strömende Gas aufweist.

Weist das zu den Zylindern offene und gasdichte Kurbelgehäuse eine Gasführung mit mindestens einer Leitfläche zur Kühlung der elektrischen Maschine auf, kann die elektrische Maschine durch das im Kurbelgehäuse aufgrund der Kolbenbewegungen der Zylinderkolben hin und her strömende Gas effizient gekühlt werden. Die elektrische Maschine liegt nämlich damit zwischen den beiden Zylindern bzw. im Strömungsweg des Gases von einer Seite zur jeweils anderen Seite im Kurbelgehäuse, bedingt durch phasenverschobene Kolbenbewegungen. Zur Ausbildung der Leitflächen sind Ausnehmungen, Leitbleche, Düsen und andere Öffnungen, angeordnet im bzw. ausgebildet vom Kurbelgehäuse, denkbar. Außerdem kann durch die baulichen Maßnahmen zwischen den beiden Kurbelzapfen, beispielsweise durch die Hauptlager bzw. deren Lagerflansch, der elektrischen Maschine bzw. deren Rotor und/oder Stator etc, eine Art Trennung des Kurbelgehäuses in zwei Kurbelgehäuseteilen geschaffen werden, was auf Strömungsgeschwindigkeit des Gases bereichsweise erhöhen und damit die Kühlung weiter verbessern kann. Natürlich versteht es sich von selbst, dass durch diese erfindungsgemäß verbesserte Gasführung auch Lager bzw. andere sich im Kurbelgehäuse erwärmende Bauteile mitgekühlt werden können. Zudem kann aufgrund des gasdichten Kurbelgehäuses, das zu den Zylindern hin offen ist, das Gas des Kurbelgehäuses bekanntermaßen unter Überdruck gesetzt werden, was als aufgeladens Puffervolumen im Kurbelgehäuse die Wärmeaufnahme des hin und her strömenden Gases erheblich verbessern kann. Trotz kompakter Bauform am Kurbelgehäuse kann daher durch eine effiziente Kühlung stehst ein hoher Wirkungsgrad und damit eine hohe Standfestigkeit der elektrischen Maschine garantiert werden. Erfindungsgemäß kann sich daher eine thermodynamische Maschine mit einer erhöhten Energiebilanz und geringem Wartungsaufwand ergeben.

Die mechanische Steifigkeit der Kurbelwelle kann erhöht werden, wenn der abgestützte Wellenzapfen die den Rotor der elektrischen Maschine tragende Maschinenwelle ausbildet.

Weitere Verbesserungen hinsichtlich der Schwingungsneigung können sich ergeben, wenn der Wellenzapfen beidseitig des Rotors durch mindestens ein Hauptlager abgestützt ist. Zudem kann damit auf eigene Motorlager der elektrischen Maschine verzichtet und hierzu die Hauptlager der Kurbelwelle herangezogen werden.

Die Kühlung der elektrischen Maschine kann erheblich gesteigert werden, wenn die elektrische Maschine im Kurbelgehäuse in offener Bauform angeordnet ist. Sowohl Rotor und Stator als auch die elektrische Wicklung, insbesondere seine Wicklungsköpfe, sind so vom hin und her strömenden und als Wärmeträger wirkenden Gas verbessert erreichbar, womit der Wärmeabtrag von diesen Konstruktionselementen und in weiterer Folge die Effizienz und Standfestigkeit der elektrischen Maschine gesteigert werden können.

Bildet ein Lagerflansch eines Hauptlagers mindestens eine Leitfläche der Gasführung aus, kann diesem Lagerflansch neben seiner Funktion zur Abstützung der Hauptlager auch jene zur Kühlung der elektrischen Maschine gegeben werden. Auf diese Weise ist auch der konstruktive Aufwand zur Ausbildung der Gasführung verringerbar.

Der Lagerflansch kann besonders vorteilhaft zur Gasführung beitragen bzw. für diese genutzt werden, wenn mindestens eine Flanschöffnung am Flanschkragen des Lagerflansches eine Leitfläche der Gasführung ausbildet. Diese Flanschöffnung kann beispielsweise eine durchgehende Bohrung im Flanschkragen sein.

Weitere Verbesserungen in der Gasführung durch den Lagerflansch können erreicht werden, indem dass der Flanschkragen mehrere, insbesondere gleichmäßig, verteilt angeordnete Flanschöffnungen aufweist. Dies kann unter anderem einer exakt ausgerichteten Gasströmung und somit auch einem gleichmäßig Wärmeabtrag förderlich sein.

Die elektrische Maschine kann in einen Teil des Kurbelgehäuses konstruktiv gekapselt werden, wenn der Lagerflansch das Hauptlager mit einem sich radial erstreckenden Flanschkragen umfasst. Zudem können damit die Strömungsgeschwindigkeit des Gases bereichsweise erhöht und damit die Kühlung der elektrischen Maschine verbessert werden.

Der Spalt zwischen Stator und Rotor der elektrischen Maschine kann effektiv zur Gasführung und zu ihrer Kühlung der genutzt werden, indem eine Leitfläche der Gasführung eine gerichtete Gasströmung auf den Spalt erzeugt.
Umströmt die Gasführung die Wicklungsköpfe der elektrischen Maschine, kann das Leistungspotenzial der elektrischen Maschine erhöht bzw. damit auch eventuell deren Nutzungsdauer verlängert werden. Dies kann sichergestellt werden, wenn eine Leitfläche der Gasführung eine auf mindestens einen Wicklungskopf der elektrischen Maschine gerichtete Gasströmung erzeugt.

Die Kühlung der elektrischen Maschine kann weiter verbessert werden, wenn eine Leitfläche der Gasführung von mindestens eine Statorausnehmung im Stator der elektrischen Maschine ausgebildet wird. Auch kann damit auf verhältnismäßig einfache konstruktive Weise das hin und her strömende Gas in den Bereich der Statorwicklung bzw. auch im Bereich der Wicklungsköpfe geführt werden.
Alternativ bzw. ergänzend dazu ist vorstellbar, dass eine Leitfläche der Gasführung von mindestens einer Kurbelgehäuseausnehmung im Kurbelgehäuse ausgebildet wird, was insbesondere eine effektive Kühlung der Wicklungsköpfe der Statorwicklung sicherstellen kann.

Geht die Kurbelwelle von einem abgestützten Wellenzapfen in einen anschließenden Kurbelzapfen kröpfungsfrei über, kann mit einer erheblichen Erleichterung im Montage- und/oder Wartungsaufwand gerechnet werden, weil damit eine Kurbelwelle ohne in diesem Bereich sonst vorstehenden und damit sperrigen Kurbelwangen ausgebildet werden kann. Die erfindungsgemäße Kurbelwelle zeigt zwar im Vergleich zu bekannten Kurbelwellen im Bereich des Hauptlagers einen erhöhten Außendurchmesser, um damit auch einen entsprechenden exzentrischen Versatz der Kurbelzapfen zu ermöglichen, als Schwungmasse genutzt kann diese aber zur Verbesserung des Rundlaufs der Kurbelwelle beitragen. Vor allen aber kann dieser erhöhte Außendurchmesser im Bereich des Wellenzapfens ermöglichen, bei einem offenen Verbund von Kurbelwelle und Pleuel diese Kurbelwelle ohne Störkonturen im Kurbelgehäuse einzusetzen bzw. aus diesem zu entfernen. Letzteres kann nicht zuletzt die Wartung der Hauptlager der Kurbelwelle erleichtern. Da zudem die Kurbelwelle die Maschinenwelle der elektrischen Maschine ausbildet, kann damit auch die elektrische Maschine über die Kurbelwelle verhältnismäßig einfach montiert bzw. für Wartungszwecke zugänglich bleiben. Diese erfindungsgemäße Ausführung der Kurbelwelle, und zwar im Bereich ihres Kurbelzapfens, kann daher die Vorteile hinsichtlich kompakter Bauverhältnisse der Stirlingmaschine mit jenen einer erleichterten Montage bzw. Wartung der Stirlingmaschine kombinieren. In weiterer Folge können sich also verminderte Herstellungs- bzw. Wartungskosten ergeben. Vorstehend genannte Vorteile können sich insbesondere ergeben, wenn die Kurbelwelle von einem abgestützten Wellenzapfen an beiden Wellenzapfenenden in einen anschließenden Kurbelzapfen kröpfungsfrei übergeht.

Die Stirlingmaschine kann weitere Verbesserungen hinsichtlich der Montage und Wartung erfahren, wenn bei der Kurbelwelle auf Kurbelwangen generell verzichtet wird, also die gesamte Kurbelwelle kröpfungsfrei ausgeführt ist.

Eine konstruktiv einfache Lösung bei der Ausbildung einer kröpfungsfreien Kurbelwelle kann sich ergeben, wenn ein Kurbelzapfen am Außendurchmesser des anschließenden Wellenzapfens bündig anschließt oder gegenüber dem Außendurchmesser des anschließenden Wellenzapfens zurückspringt. Insbesondere letztere Ausführung kann die Montage und Wartung erleichtern, indem die Kurbelzapfen beim Einsetzen bzw. Entfernen der Kurbelwelle gegenüber den Hauptlagern berührungsfrei bleiben.

Ist an einem Kurbelzapfen eine Schwungmasse befestigt ist, kann der Rundlauf der Kurbelwelle weiter verbessert werden. Zudem kann damit ein kompaktes Kurbelgehäuse geschaffen werden, insbesondere wenn an beiden Kurbelzapfen eine Schwungmasse befestigt ist.

Solch eine Schwungmasse kann auch ein idealer Angriffspunkt für ein Ausgleichspleuel darstellen, um eine erhöhte Masse des Zylinderkolbens auszugleichen, was insbesondere beim Arbeitskolben der Fall sein kann. Hierzu kann die Schwungmasse einen Zapfen aufweisen, der zum anschließenden Kurbelzapfen winkelversetzt und gegenüber der Kurbelwelle exzentrisch angeordnet ist, an welchem Zapfen ein Ausgleichspleuel befestigt ist.

In den Zeichnungen ist beispielsweise der Erfindungsgegenstand anhand mehrer Ausführungsvarianten näher dargestellt. Es zeigen
- Fig. 1: eine geschnittene Seitenansicht einer Stirlingmaschine nach einer ersten Ausführungsvariante,
- Fig. 2: eine Detailansicht des Kurbelgehäuses nach Fig. 1,
- Fig. 3: eine abgerissene Schnittansicht nach III-III der Fig. 2 und
- Fig. 4: eine Detailansicht zu einem nach Fig. 2 dargestellten alternativen Kurbelgehäuse für eine Stirlingmaschine.

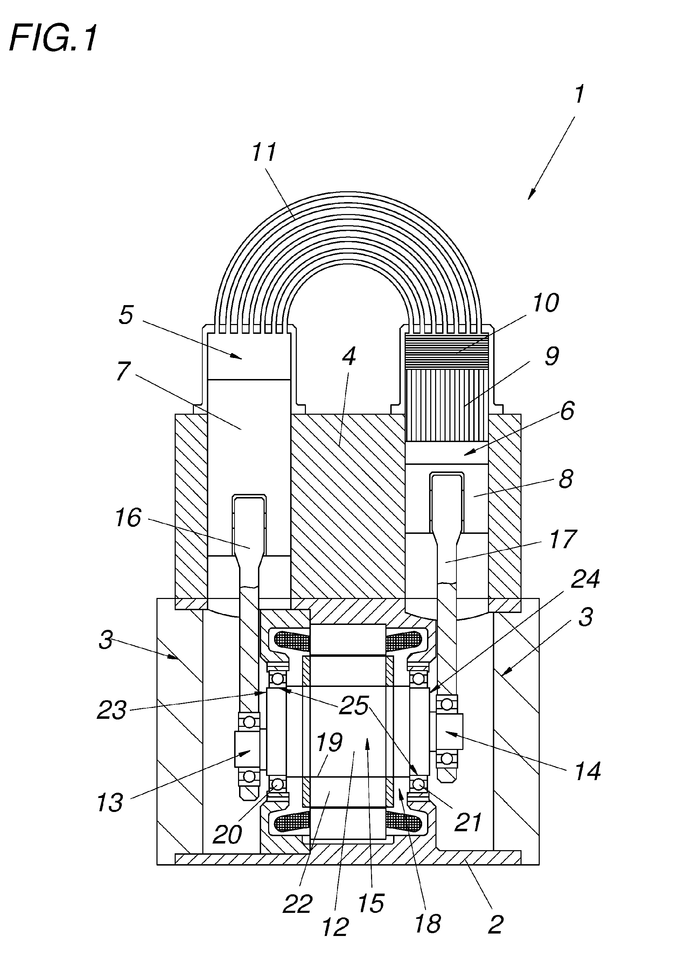

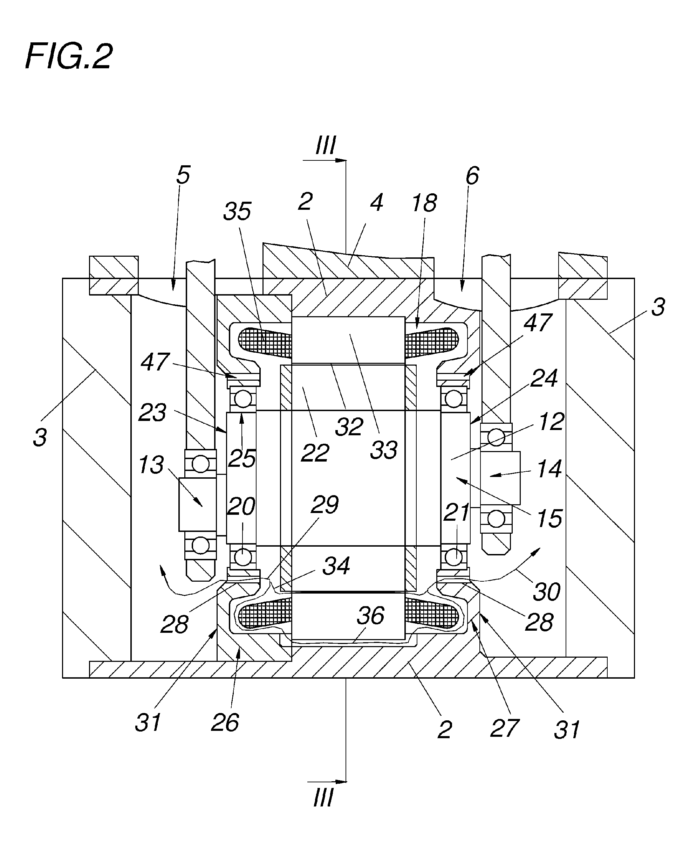

Gemäß Fig. 1 ist beispielsweise eine thermodynamische Maschine 1 vereinfacht dargestellt. Diese thermodynamische Maschine 1, insbesondere Stirlingmaschine in Alpha Konfiguration, zeigt ein gasdichtes Kurbelgehäuse 2 mit abnehmbaren Gehäusedeckeln 3. Auf dem Kurbelgehäuse 2 sitzt ein Zylindergehäuse 4, das eine mechanische Verbindung der Zylinder 5 und 6 mit dem Kurbelgehäuse 2 bildet. Die Zylinder 5 und 6 führen jeweils Zylinderkolben 7, 8, von denen der Zylinderkolben 7 als Arbeitskolben und der Zylinderkolben 8 als Kompressionskolben angesehen werden können. Zwischen den Zylindern 5, 6 besteht bekanntermaßen eine gasführende Verbindung, nämlich über den Kühler 9, den Regenerator 10 und den Erhitzer 11 für ein nicht näher dargestelltes Arbeitsgas. Im Kurbelgehäuse 2 befindet sich eine Kurbelwelle 12 mit zwei winkelversetzte Kurbelzapfen 13, 14 und einem Wellenzapfen 15. Die zwei Kurbelzapfen 13, 14 sind über Pleuel 16, 17 mit den, ihren jeweils zugeordneten Zylinderkolben 7, 8 verbunden. Hierzu schließen die Pleuel 16, 17 an den jeweiligen Kurbelzapfen 13, 14 bzw. Zylinderkolben 7, 8 an. Die Kurbelwelle 12 endet an den exzentrischen Kurbelzapfen 13, 14. Zwischen diesen Kurbelzapfen 13, 14 ist außerdem eine elektrische Maschine 18 vorgesehen, wobei die Kurbelwelle 12 als Maschinenwelle 19 der elektrischen Maschine 18 verwendet wird bzw. diese ausbildet. Hauptlager 20 und 21 stützen die Kurbelwelle 12 im Kurbelgehäuse 2 ab. Da die Kurbelwelle 12 einen Teil der elektrischen Maschine 18 ausbildet, die zudem mittig zwischen den Zylindern 5, 6 im Kurbelgehäuse 2 platziert ist, bedarf es beim Zusammenbau des Kurbelgehäuses 2 einer besonderen Rücksichtnahme auf Störkonturen - beispielsweise verursacht durch Kröpfungen an der Kurbelwelle 12 oder durch an der Kurbelwelle 12 vorgesehene Teile, beispielsweise eines Rotors 22 der elektrischen Maschine 18 - wie dies nach Fig. 2 besser erkannt werden kann. Erfindungsgemäß wird dieser Umstand entschärft, indem die Kurbelwelle 12 von einem abgestützten Wellenzapfen 15 in einen anschließenden Kurbelzapfen 13 bzw. 14 kröpfungsfrei übergeht, und zwar - wie in Fig. 2 zu erkennen -, an beiden Wellenzapfenenden 23, 24. Damit entsteht ein vergrößerter Außendurchmesser 25 am Wellenzapfen 15 mit mehr Freiraum, um die Kurbelwelle 12 für Montagezwecke erleichtert einzusetzen bzw. für Wartungszwecke zu entnehmen. Zudem sind damit teilungsfreie Hauptlager 20, 21 verwendbar, was auch Vorteile in der Standfestigkeit der thermodynamischen Maschine 1 mit sich bringt. Die Außendurchmesser 25 des Wellenzapfens 15 im Bereich der Hauptlager 20, 21 bzw. der Innendurchmesser der Hauptlager 20, 21 sind so gewählt, dass die Kurbelzapfen 13, 14 der Kurbelwelle 12 ohne Kröpfung und in einem Stück mit der Kurbelwelle 12 hergestellt werden können. Die erfindungsgemäße Kurbelwelle 12 ist dadurch zur Gänze kröpfungsfrei, was für eine hohe mechanische Steifigkeit sorgt.

Indem die beiden endseitigen Kurbelzapfen 13, 14 gegenüber dem Außendurchmesser 15 des anschließenden Wellenzapfens 15 zurückspringen, verbessert sich die Kontur der Kurbelwelle 12 in Hinblick auf deren Handhabung weiter. Die endseitigen Kurbelzapfen 13, 14 am Außendurchmesser des anschließenden Wellenzapfens können aber auch bündig anschließen, was nicht näher dargestellt worden ist.

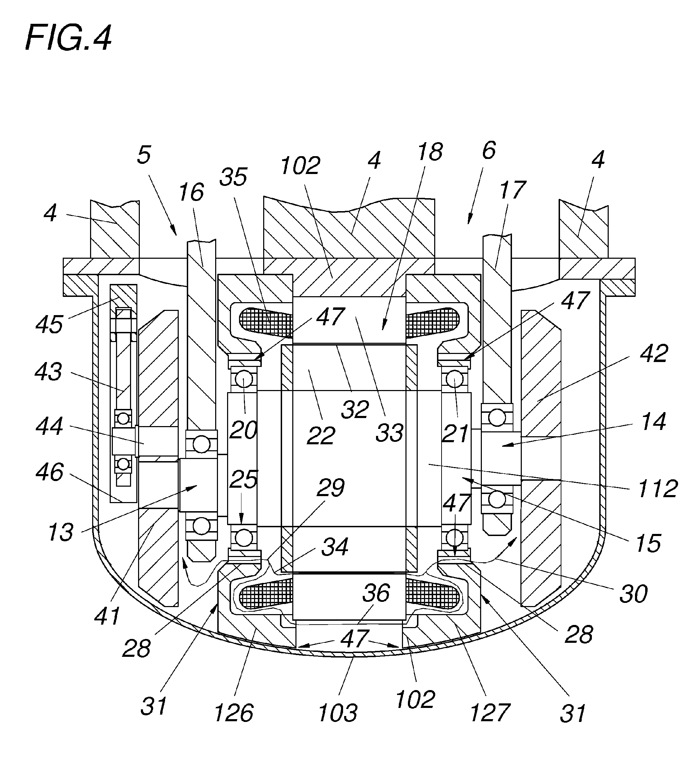

Wie außerdem in den Figuren 1 und 2 zu erkennen, ist der Rotor 22 der elektrischen Maschine 18 am Wellenzapfen 15 befestigt, der von den beiden Hauptlagern 20, 21 abgestützt wird, nämlich beidseitig des Rotors 22. Damit kann auf zusätzliche Wellenlager der elektrischen Maschine 18 verzichtet werden. Zur Ausbildung dieser Abstützung bzw. Lagerung, was auch als Fest-Los-Lagerung ausgeführt sein kann, springt der Wellenzapfen 15 im Bereich der Hauptlager 20, 21 zurück. Diese Ausführung kann auch in der Fig. 4 erkannt werden.

Die Hauptlager 20, 21 sind über Lagerflansche 26, 27 am Kurbelgehäuse 2 abgestützt bzw. montiert. Dabei ist das Kurbelgehäuse 2 mit dem Lagerflansch 27 fest verbunden bzw. bildet diesen im Ausführungsbeispiel aus, während der Lagerflansch 26 am Kurbelgehäuse 2 lösbar befestigt ist. Damit kann bei gelöstem Lagerflansch 26 die Kurbelwelle 12 bei abgenommenem Gehäusedeckel 3 und offenem Pleuelverbund aus dem Kurbelgehäuse 2 herausgezogen werden. Die Kurbelzapfen 13, 14 verursachen keine Störkontur, weil diese am gemeinsamen Wellenzapfen 15 anschließen, ohne damit eine Kröpfung der Kurbelwelle 12 zu verursachen.

Die Lagerflansche 26, 27 zur Abstützung der Hauptlager 20, 21 haben auch die Funktion, der Kühlung der elektrischen Maschine 18 zu dienen, wie diese insbesondere der Fig. 2 zu entnehmen ist. So bilden diese Lagerflansche 26, 27 Leitflächen 28 für eine Gasführung 29 aus, und zwar für ein im Kurbelgehäuse 2 hin und her strömendes Gas 30. Das gasdichte Kurbelgehäuse 2 ist nämlich zu den Zylindern 5, 6 hin offen, und dient damit auch als Puffervolumen bzw. erzeugen sohin die Kolbenbewegungen im Kurbelgehäuse 2 Druckdifferenzen, was das dortige Gas 30 in Bewegung setzen. Eine effiziente Kühlung der elektrischen Maschine 18 ist damit gegeben, zumal das im Kurbelgehäuse unter Überdruck stehende Gas 30, um das Puffervolumen für das Arbeitsgas zu schaffen, den Wärmeabtrag bzw. damit die Kühlung weiter verbessert. In diesem Zusammenhang ist vorstellbar, dass an der Außenseite des Kurbelgehäuses 2 durch Wasserkühlung und/oder Luftkühlung die vom Gas 30 auf genommene thermische Energie abgeführt wird.

Wie insbesondere der Fig. 2 weiter zu entnehmen, ist die elektrische Maschine 18 im Kurbelgehäuse 2 von einem Maschinengehäuse frei montiert bzw. dort in offener Bauform angeordnet. Damit sind die Komponenten der elektrischen Maschine 18 besonders gut zu kühlen, besonders auch mit Hilfe des hin und her strömende Gases 30.

Dazu tragen Leitflächen 28 bei, die sich aufgrund von Flanschöffnungen 47 am jeweiligen Flanschkragen 31 der Lagerflansche 26, 27 ausbilden. Bohrungen können beispielsweise solche Flanschöffnungen 47 ausbilden. Auch sind diese Flanschöffnungen 47 gleichmäßig verteilt angeordnet, um die elektrische Maschine 18 homogen zu kühlen. Dies wird unter anderem dadurch unterstützt, dass der Lagerflansch mit einem sich radial erstreckenden Flanschkragen 31 das Hauptlager umfasst und damit eine Art gasdurchlässige Abschottung im Kurbelgehäuse 2 erzeugt.

Im Allgemeinen wird erwähnt, dass auch andere Möglichkeiten vorstellbar sind, solche eine gasdurchlässige Abschottung bzw. Trennung im Kurbelgehäuse einzuziehen, um damit Leitflächen zur Führung des durch die Zylinderkolben im Kurbelgehäuse vergleichsweise stark bewegte Gases 30 zu schaffen. Bevorzugt bietet sich jedoch der Bereich der Hauptlager 20, 21 an, weil dort bereits durch den Lagerflansch 26, 27 in das Kurbelgehäuse 2 vorstehende Konstruktionselemente vorhanden sind bzw. mitgenützt werden können. Zudem kann durch die beiden Lagerflansche 26, 27 die elektrische Maschine 18 im Kurbelgehäuse 2 auf konstruktiv einfache Weise gasdurchlässig eingekapselt werden.

Mit den Leitflächen 28 kann unter anderem eine auf den Spalt 32 zwischen Stator 33 und Rotor 22 der elektrischen Maschine 18 gerichtete Gasströmung 34 und/oder auch eine auf mindestens die Wicklungsköpfe 35 der elektrischen Maschine 18 gerichtete Gasströmung 36 erzeugt werden.

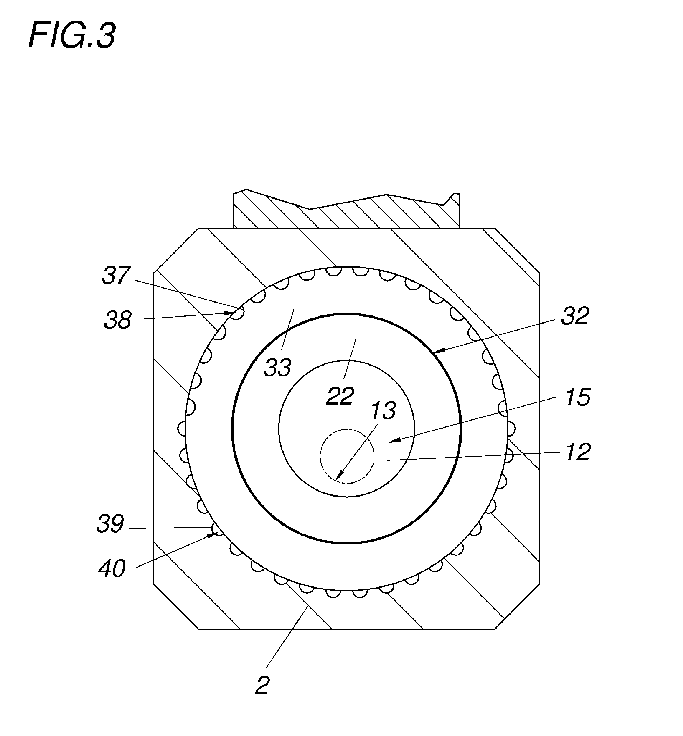

Es kann aber auch der Stator 33 Leitflächen 37 ausbilden, und zwar über nutartige Statorausnehmungen 38 im Stator 33 der elektrischen Maschine 18, wie dies in Fig. 3 zu erkennen ist. Weitere Leitflächen 39 der Gasführung 29 werden von nutenförmigen Kurbelgehäuseausnehmungen 40 im Kurbelgehäuse 2 ausgebildet. Eine effektive Kühlung der elektrischen Maschine 18 kann damit erreicht werden, zumal diese zusätzlich für die Kühlung der Wickelköpfe 35 und des Stators 33 förderlich ist.

Gemäß Fig. 4 ist eine alternative Ausführung eines Kurbelgehäuses 102 für eine thermodynamische Maschine 1 nach den Fig. 1 bis 3 zu erkennen. Dieses Kurbelgehäuse 102 unterscheidet sich vom nach Fig. 2 dargestellten Kurbelgehäuse 2 im Wesentlichen in den Bereichen des Gehäusedeckels 103 und der Kurbelwelle 112. So ist dieser Gehäusedeckel 103 als rotationssymmetrischer Dom ausgeführt und nimmt die Kurbelwelle 112, die elektrische Maschine 18 und die Hauptlager 20, 21 zur Lagerung der Kurbelwelle 112 auf. Über den Gehäusedeckel 103 ist das Kurbelgehäuse 102 äußerst einfach zugänglich.

Weiter sind zum Unterschied zur Kurbelwelle 12 die Kurbelzapfen 13, 14 der Kurbelwelle 112 verlängert ausgeführt und tragen je eine beispielsweise als Schwungrad ausgeführte Schwungmasse 41, 42. Dies verbessert den Gleichlauf der Kurbelwelle 112. Die Schwungmasse 41 dient zudem als Lager für ein Ausgleichspleuel 43. Hierfür ist die Schwungmasse 41 mit einem Zapfen 44 versehen, der zum anschließenden Kurbelzapfen 13 winkelversetzt und gegenüber der Kurbelwelle 112 exzentrisch angeordnet ist. Dieser Zapfen 44 lagert das Ausgleichspleuel 43 an der Kurbelwelle 112, welches Ausgleichspleuel 43 als Massenausgleich dient. Das Ausgleichspleuel 43 ist mit einer Masse 45 verbunden, welche im Kurbelgehäuse 102 über eine Linearführung 46 verschiebbar gelagert ist.

Die Lagerflansche 126, 127 erfüllen mithilfe der beschriebenen Maßnahmen - gleichwie beim Ausführungsbeispiel nach den Figuren 1 bis 3 - sowohl die Funktion der Abstützung der Hauptlager 20, 21 als auch die Funktion der Kühlung der elektrischen Maschine 18. Die Lagerflansche 126, 127 sind dahingehend konstruktiv anders ausgeführt, als dass diese gegenüber dem Gehäusedeckel 103 einen Dichtungsspalt 47 ausbilden, um das hin und her strömende Gas 30 über Leitflächen 28 zu zwingen. Zudem sind beide Lagerflansche 126, 127 mit dem Kurbelgehäuse 102 lösbar verbunden, beispielsweise über nicht näher dargestellte Schraubverbindungen.

## Patentansprüche

1. Thermodynamische Maschine, insbesondere Stirlingmaschine, mit mindestens zwei Zylindern (5, 6), die je mindestens einen, mit einem Pleuel (16, 17) verbundenen Zylinderkolben (7, 8) führen, und mit einem mit den Zylindern (5, 6) verbundenen Kurbelgehäuse (2), das eine Kurbelwelle (12, 112), eine elektrische Maschine (18) und mindestens ein Hauptlager (20, 21) zur Lagerung der Kurbelwelle (12, 112) aufweist, wobei die Kurbelwelle (12, 112) die Maschinenwelle (19) der elektrischen Maschine (18) ausbildet sowie einen von wenigstens einem Hauptlager (20, 21) abgestützten Wellenzapfen (15) und zwei Kurbelzapfen (13, 14) aufweist, die mit jeweils einem Pleuel (16, 17) unterschiedlicher Zylinderkolben (7, 8) verbunden sind und zwischen denen die elektrische Maschine (18) angeordnet ist, **dadurch gekennzeichnet, dass** das zu den Zylindern (5, 6) offene und gasdichte Kurbelgehäuse (2) eine Gasführung (29) mit mindestens einer Leitfläche (28, 37, 39) zur Kühlung der elektrischen Maschine (18) durch das im Kurbelgehäuse (2) aufgrund der Kolbenbewegungen der Zylinderkolben (7, 8) hin und her strömende Gas (30) aufweist.

2. Thermodynamische Maschine Anspruch 1, **dadurch gekennzeichnet, dass** der abgestützte Wellenzapfen (15) die den Rotor (22) der elektrischen Maschine (18) tragende Maschinenwelle (19) ausbildet.

3. Thermodynamische Maschine nach Anspruch 2, **dadurch gekennzeichnet, dass** der Wellenzapfen (15) beidseitig des Rotors (22) durch mindestens ein Hauptlager (20, 21) abgestützt ist.

4. Thermodynamische Maschine nach Anspruch 1, 2 oder 3, **dadurch gekennzeichnet, dass** die elektrische Maschine (18) im Kurbelgehäuse (2) in offener Bauform angeordnet ist.

5. Thermodynamische Maschine nach einem der Ansprüche 1 bis 4, **dadurch gekennzeichnet, dass** ein Lagerflansch (26, 27) eines Hauptlagers (20, 21) mindestens eine Leitfläche (28) der Gasführung (29) ausbildet.

6. Thermodynamische Maschine nach Anspruch 5, **dadurch gekennzeichnet, dass** mindestens eine Flanschöffnung (29) am Flanschkragen (31) des Lagerflansches (29) eine Leitfläche (28) der Gasführung (29) ausbildet.

7. Thermodynamische Maschine nach Anspruch 6, **dadurch gekennzeichnet, dass** der Flanschkragen (31) mehrere, insbesondere gleichmäßig, verteilt angeordnete Flanschöffnungen (47) aufweist.

8. Thermodynamische Maschine nach Anspruch 5, 6 oder 7, **dadurch gekennzeichnet, dass** der Lagerflansch (26, 27) das Hauptlager (20, 21) mit einem sich radial erstreckenden Flanschkragen (31) umfasst.

9. Thermodynamische Maschine nach einem der Ansprüche 1 bis 8, **dadurch gekennzeichnet, dass** eine Leitfläche (28) der Gasführung (29) eine gerichtete Gasströmung (34) auf den Spalt (32) zwischen Stator (33) und Rotor (22) der elektrischen Maschinen (18) und/oder eine Leitfläche (37, 39) der Gasführung (29) eine auf mindestens einen Wicklungskopf (35) der elektrischen Maschine (18) gerichtete Gasströmung (36) erzeugt.

10. Thermodynamische Maschine nach einem der Ansprüche 1 bis 9, **dadurch gekennzeichnet, dass** eine Leitfläche (37) der Gasführung (29) von mindestens einer Statorausnehmung (38) im Stator (33) der elektrischen Maschine und/oder eine Leitfläche (39) der Gasführung (29) von mindestens einer Kurbelgehäuseausnehmung (40) im Kurbelgehäuse (2) ausgebildet wird.

11. Thermodynamische Maschine nach einem der Ansprüche 1 bis 10, **dadurch gekennzeichnet, dass** die Kurbelwelle (12, 112) von einem abgestützten Wellenzapfen (15), insbesondere an beiden Wellenzapfenenden (23, 24), in einen anschließenden Kurbelzapfen (13, 14) kröpfungsfrei übergeht.

12. Thermodynamische Maschine nach Anspruch 11, **dadurch gekennzeichnet, dass** die gesamte Kurbelwelle (12, 112) kröpfungsfrei ausgeführt ist.

13. Thermodynamische Maschine nach Anspruch 11 oder 12, **dadurch gekennzeichnet, dass** ein Kurbelzapfen (13, 14) am Außendurchmesser (25) des anschließenden Wellenzapfens (15) bündig anschließt oder gegenüber dem Außendurchmesser (25) des anschließenden Wellenzapfens (15) zurückspringt.

14. Thermodynamische Maschine nach einem der Ansprüche 1 bis 13, **dadurch gekennzeichnet, dass** an einem, insbesondere an beiden, Kurbelzapfen (13, 14) eine Schwungmasse (41, 42) befestigt ist.

15. Thermodynamische Maschine nach Anspruch 14, **dadurch gekennzeichnet, dass** eine Schwungmasse (41) einen Zapfen (44) aufweist, der zum anschließenden Kurbelzapfen (13) winkelversetzt und gegenüber der Kurbelwelle (112) exzentrisch angeordnet ist, an welchem Zapfen (44) ein Ausgleichspleuel (43) befestigt ist.
